# EUROPÄISCHE PATENTSCHRIFT

(11) **EP 1 140 572 B1**
(45) Veröffentlichungstag und Bekanntmachung des Hinweises auf die Patenterteilung: **19.05.2004**
(21) Anmeldenummer: 00975887.1
(22) Anmeldetag: 19.10.2000
(51) Int. Cl.: B60R 21/22, B60N 2/58

(54) **KRAFTFAHRZEUGSITZ**
MOTOR VEHICLE SEAT
SIEGE POUR VEHICULE AUTOMOBILE

(30) Priorität: 21.10.1999 DE 19950702
(43) Veröffentlichungstag der Anmeldung: 10.10.2001
(73) Patentinhaber: Volkswagen Aktiengesellschaft, 38436 Wolfsburg (DE)
(72) Erfinder: WOHLLEBE, Thomas, 38110 Braunschweig (DE); SINNHUBER, Ruprecht, 38518 Gifhorn (DE)
(74) Vertreter: Schneider, Henry, Dipl.-Ing.
(86) Internationale Anmeldenummer: PCT/EP2000/010316
(87) Internationale Veröffentlichungsnummer: WO 2001/028819

(56) Entgegenhaltungen:
- DE-A- 4 305 295
- GB-A- 2 293 355
- GB-A- 2 322 603
- US-A- 4 589 695
- PATENT ABSTRACTS OF JAPAN vol. 1999, no. 05, 31. Mai 1999 (1999-05-31) & JP 11 034711 A (ARACO CORP), 9. Februar 1999 (1999-02-09)
- PATENT ABSTRACTS OF JAPAN vol. 1998, no. 03, 27. Februar 1998 (1998-02-27) & JP 09 295549 A (TOYODA GOSEI CO LTD), 18. November 1997 (1997-11-18)

## Beschreibung

Die Erfindung betrifft einen Kraftfahrzeugsitz mit einem gepolsterten Sitzteil, dessen Sitzfläche von den Oberseiten eines Mittelteils und zweier in Bezug zum Mittelteil leicht nach oben überstehender Seitenwangen gebildet wird, und/oder mit einer gepolsterten Rückenlehne, deren Anlehnfläche von den Vorderseiten eines Mittelteils und zweier in Bezug zum Mittelteil leicht nach vorne überstehender Seitenwangen gebildet wird.

In Unfallsituationen, in denen ein Personenwagen auf einer Seite mit höherer Geschwindigkeit von einem anderen Fahrzeug gerammt und dadurch seine Vorder- oder Hintertüre nach innen in die Fahrgastzelle eingedrückt wird, kommt es nicht selten zu schweren Verletzungen von Fahrzeuginsassen, die beim Unfall auf dem zur eingedrückten Türe benachbarten Fahrzeugsitz sitzen. Diese Verletzungen treten nicht nur am Kopf oder Oberkörper des Fahrzeuginsassen auf, sondern auch im Bereich der Hüfte und der Oberschenkel, welche sich im Wesentlichen in Höhe der hauptsächlichen Aufprallstelle der Frontpartie des aufprallenden Fahrzugs befinden.

Zum Schutz der Fahrzeuginsassen vor Verletzungen infolge eines Seitenaufpralls sind moderne Personenkraftwagen häufig bereits serienmäßig mit Seitenairbags ausgestattet, die sich bei einem Seitenaufprall zwischen dem Fahrzeuginsassen und der Türe oder Seitenwand aufblasen. Diese Seitenairbags können sowohl in die Türe als auch in den Fahrzeugsitz selbst integriert sein, wie beispielsweise aus der EP 0 565 501 A1 und der DE 43 07 421 A1 bekannt. Die zuerst genannte Druckschrift zeigt einen in die Rückenlehne des Sitzes integrierten Airbag, der ausgehend von der Schmalseite der Rückenlehne nach vorne zu aufgeblasen wird, um den Oberkörper des Fahrzeuginsassen zu schützen, während die zuletzt genannte Druckschrift auch einen in den Sitzteil des Sitzes integrierten Airbag zeigt, der ausgehend von der Schmalseite des Sitzteils nach oben zu aufgeblasen wird, um die Hüfte und die Oberschenkel des Fahrzeuginsassen zu schützen.

Im Unterschied zu Fahrer- oder Beifahrerairbags, die hauptsächlich dazu dienen, bei einem Frontalaufprall mit hoher Geschwindigkeit die trägheitsbedingte Vorwärtsbewegung des Kopfs und Oberkörpers des Fahrzeuginsassen in Fahrtrichtung so sanft wie möglich abzubremsen, das heißt auf einer verhältnismäßig großen Wegstrecke, kommt es beim Seitenaufprall zu einer geringeren Seitwärtsbeschleunigung des Fahrzeuginsassen, jedoch muss dieser dafür auf einer verhältnismäßig kurzen Wegstrecke abgebremst werden. Außerdem besitzt der Seitenairbag die zusätzliche Funktion, zwischen dem Fahrzeuginsassen und der benachbarten intrudierenden Türe oder Seitenwand ein Polster zu bilden, das den Fahrzeuginsassen vor Verletzungen durch eindringende Teile, zum Beispiel abgebrochene Teile der Türinnenverkleidung oder dergleichen, schützen soll. Eine weitere Funktion des Seitenairbags besteht darüber hinaus darin, den Fahrzeuginsassen in einer Sitzposition auf dem Fahrzeugsitz festzuhalten, in der andere Rückhaltesysteme, wie beispielsweise der Sicherheitsgurt, eine optimale Wirkung entfalten.

Die beiden zuletzt genannten Aufgaben werden jedoch von den herkömmlichen Seitenairbags nur unvollkommen gelöst, da sie von intrudierenden Gegenständen beiseite gedrückt werden oder sich beim Aufprall des Fahrzeuginsassen soweit einbeulen, dass dieser nicht mehr in der optimalen Sitzposition auf dem Sitz gehalten wird.

Eine weitere Lösung zu einem mit einem Fahrzeugsitz in Verbindung stehenden seitlichen Aufprallschutz ist aus der DE 197 42 584 A1 bekannt. Gemäß dieser Erfindung ist eine Luftsackeinrichtung in einem Fahrzeugsitz vorgesehen, die eine innerhalb der Polsterung angeordnete Füllvorrichtung enthält, die ein Gas erzeugen kann. Der Sitzbezug der Polsterung des Fahrzeugsitzes ist dabei so ausgebildet, dass er sich bei einem Seitenaufprall des Fahrzeuges durch das von der Füllvorrichtung erzeugte Gas wie ein Sack zwischen einem Fahrzeuginsassen und der Fahrzeugkarosserie ausbreitet. Gemäß der Erfindung sind in Bereichen der Polsterung des Sitzes, in denen sich das Polster auswölben soll, eine Schwachstelle oder eine Sollbruchstelle ausgebildet. Dadurch soll gewährleistet werden, dass im Falle eines Seitenaufpralls das Polster sich nach außen wölben und der darüber befindlichen Sitzbezug im vorgesehenen Bereich ausdehnen kann.

Auch mit dieser Lösung kann kein optimaler Schutz des Fahrzeuginsassen erreicht werden. Nachteilig bei dieser Lösung ist insbesondere, dass der sackartig mit Gas aufgeblasene Sitzbezug beim Seitenaufprall nur Teilbereiche des Körpers des Fahrzeuginsassen schützt. Insofern wirkt dieser mit Gas gefüllte Sitzbezug mit seiner undefinierten Konfiguration wie die Airbags der eingangs beschriebenen Lösungen. Andererseits wird damit bei einem Seitenaufprall keine ausreichende Stabilisierung der Sitzposition des Fahrzeuginsassen gewährleistet, da der gesamte Körper des Fahrzeuginsassen nur unzureichend gegen ein seitliches Verrutschen auf dem Fahrzeugsitz gesichert ist.

Des Weiteren ist ein Fahrzeugsitz bekannt, der zumindest eine zwischen einer Ruhestellung und einer Betriebsstellung bewegbare Seitenwange besitzt. Mindestens eine Seitenwange, die beispielsweise Bestandteil eines Sitzteiles ist, ist unter dem Sitzteil zwischen einem Schweller und einem Tunnel quer verlaufend eine sichtbar in ihrer Zündung längende, mit einer Rückstellsperre versehene Kolben-/Zylinderanordnung als Auslösevorrichtung angeordnet, die in Schwenkverbindung mit der mindestens einen schwenkbar gelagerten Seitenwange steht. Die mindestens eine Seitenwange umfasst einen Airbag, der bei seiner Auslösung schräg nach außen expandiert, wobei sich der Airbag der Seitenwange an einer Fahrzeugseitenwand abstützt. Diese bekannte Lösung ermöglicht zwar, dass die mindestens eine Seitenwange am Sitzteil bzw. an einer Rückenlehne aktiv zum Schutz des Fahrzeuginsassen bei einem Seitenunfall herangezogen werden kann, jedoch besteht durch die Anordnung selbst eine Verletzungsgefahr der Fahrzeuginsassen, da der Airbag bei seiner Auslösung spät nach außen expandiert und somit durchaus im Sitz- bzw. Rückenlehnenbereich des Fahrzeuginsassen angeordnet ist.

Gattungsgemäße Kraftfahrzeugsitz und Sitz- oder Schonbezug sind aus der GB-2 322 603-A bekannt.

Ausgehend hiervon liegt der Erfindung die Aufgabe zugrunde, einen Kraftfahrzeugsitz der eingangs genannten Art dahingehend zu verbessern, dass ein auf dem Sitz sitzender Fahrzeuginsasse bei einem Seitenaufprall besser festgehalten und besser vor Verletzungen durch intrudierende Gegenstände geschützt werden kann.

Diese Aufgabe wird erfindungsgemäß dadurch gelöst, dass mindestens eine der Seitenwangen des Sitzteiles und/oder der Rückenlehne im Bereich einer zwischen einem Bezugstoffzuschnitt der Seitenwange und einem, an einem angrenzenden Bezugstoffzuschnitt, eingesetzten Streifen Gewebematerial in der Seitenwange angeordneten Naht so lange durch Dehnung der Bezugstoffzuschnitte durch Aufblasen vergrößbar ist, bis der eingesetzte Streifen Gewebematerial nach Aufreißen entlang der Naht deren Ränder überbrückt, wodurch mindestens eine Seitenwange um einen weitergehenden Überstand über das jeweilige Mittelteil vergrößerbar ist.

Der Erfindung liegt der Gedanke zugrunde, die Lage- und Verformungsstabilität eines zum Abbremsen und Festhalten des Fahrzeuginsassen sowie zum Schutz vor intrudierenden Teilen verwendeten Luftpolsters dadurch zu verbessern, dass an Stelle eines sich frei entfaltenden Airbags eine oder beide über den vertieften Mittelteil des Sitzteils oder der Rückenlehne überstehenden Seitenwangen prall aufgeblasen werden, so dass sich der Überstand über den jeweiligen Mittelteil vergrößert. Durch das innerhalb der Seitenwangen erzeugte, verhältnismäßig lagestabile Luftkissen, kann ein auf dem Sitz sitzender Fahrzeuginsasse besser gegenüber intrudierenden Gegenständen abgepolstert und in einer gewünschten Sitzposition stabilisiert werden.

Eine bevorzugte Ausgestaltung der Erfindung sieht einen im Inneren der aufblasbaren Seitenwange angeordneten zusammengefalteten Luftsack vor, der bei einem Seitenaufprall zweckmäßigerweise von einem in den Sitz integrierten oder unter diesem angeordneten und mit dem Luftsack verbundenen Gasgenerator mit Gas beaufschlagt wird. Durch die Gaszufuhr füllt sich der Luftsack innerhalb der Seitenwange prall mit Gas, wodurch der über der Seitenwange angebrachte Bezugstoff nach vorne (Rückenlehne) beziehungsweise nach oben (Sitzteil) gedrückt und gespannt wird. Der gespannte Bezugstoff verhindert die freie Entfaltung des Luftsacks und hält diesen in seiner Lage fest, so dass er nicht oder nur in sehr geringem Maße zur Seite ausweichen kann.

Gemäß einer weiteren bevorzugten Ausgestaltung der Erfindung sind beide Seitenwangen links und rechts des Mittelteils der Rückenlehne und/oder des Sitzteils aufblasbar und werden bei einem Seitenaufprall aufgeblasen. Durch diese beidseitige "Einspannung" des Fahrzeuginsassen kann im Zusammenwirken mit einem Sicherheitsgurt die Sitzposition des Fahrzeuginsassen noch besser stabilisiert und zudem Verletzungen anderer Insassen durch unkontrollierte Bewegungen des Fahrzeuginsassen verhindert werden.

Um das Aufblasen der Seitenwangen ohne einen Austritt des Luftsacks aus dem Sitz zu ermöglichen, werden die Seitenwangen mit einem Bezugstoff aus einem elastisch dehnbaren Gewebematerial bezogen, das eine beträchtliche Vergrößerung der Oberfläche zulässt, und es wird entlang einer beim Aufblasen der Seitenwange aufreißenden Naht zwischen einem Bezugstoffzuschnitt der Seitenwange und einem angrenzenden Bezugsstoffzuschnitt ein Streifen Gewebematerial eingesetzt, der vor dem Aufblasen der Seitenwange unter dem oder den Bezugstoffzuschnitten angeordnet ist und beim Aufreißen der Naht deren gegenüberliegende Ränder überbrückt. Der Streifen Gewebematerial wird dabei an seinen entgegengesetzten Rändern derart mit den beiden gegenüberliegenden Rändern der Bezugstoffzuschnitte vernäht, dass die Nähte zwischen dem Gewebestreifen und den Bezugstoffzuschnitten eine höhere Belastbarkeit aufweisen als die Naht zwischen den beiden Zuschnitten, deren Belastbarkeit so gewählt wird, dass sie beim Aufblasen des Luftsacks reißt.

Im Folgenden wird die Erfindung anhand eines in der Zeichnung dargestellten Ausführungsbeispiels näher erläutert. Es zeigen:
- die Figuren 1a und 1b: perspektivische Ansichten eines erfindungsgemäßen Kraftfahrzeugsitzes vor beziehungsweise nach dem Aufblasen der Seitenwangen bei einem Seitenaufprall;
- die Figuren 2a und 2b: vertikale Querschnittsansichten eines Teils des Sitzteils des Fahrzeugsitzes aus den Figuren 1a und 1b vor beziehungsweise nach dem Aufblasen der Seitehwangen und

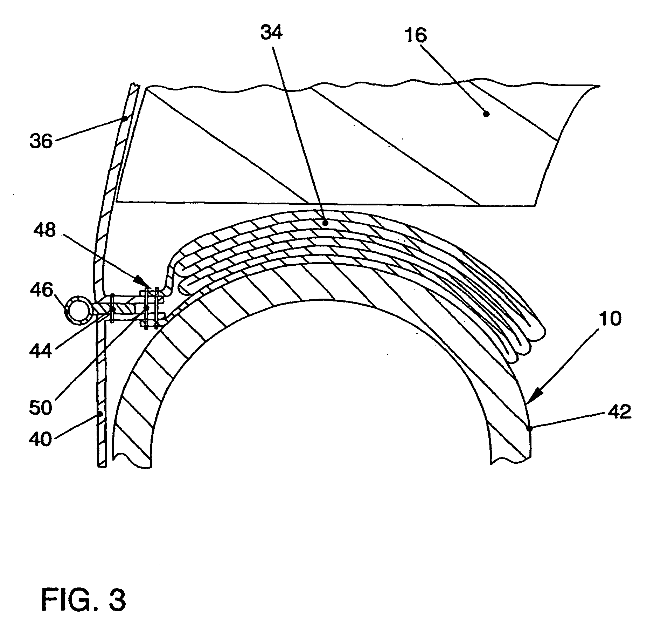

- Figur 3: eine vergrößerte Ansicht des Ausschnitts III aus Figur 2a im Bereich der Naht zwischen Bezugstoffzuschnitten der Seitenwange und eines daran angrenzenden Seitenteils des Sitzbezugs.

### - Fortsetzung auf Seite 5 der ursprünglichen Beschreibung -

Der in der Zeichnung dargestellte Kraftfahrzeugsitz 2 besteht im wesentlichen aus einem gepolsterten Sitzteil 4 und einer gepolsterten Rückenlehne 6, deren Neigung gegenüber dem Sitzteil 4 verstellbar ist.

Der Sitzteil 4 und die Rückenlehne 6 weisen jeweils eine Polsterung 8 auf, die wie die Polsterungen herkömmlicher Fahrzeugsitze ein in einem Metallrahmen 10 des Sitzteils 4 beziehungsweise der Rückenlehne 6 verspanntes federndes Drahtgeflecht 12 und ein zwischen dem Drahtgeflecht 12 und einem Sitzbezug 14 angeordnetes Schaumstoffpolster 16 umfasst.

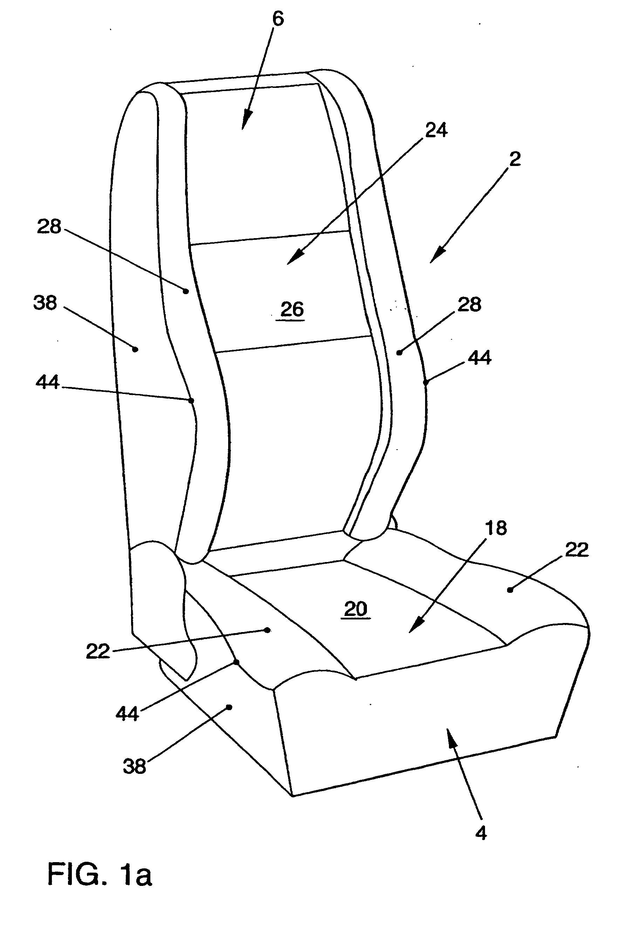

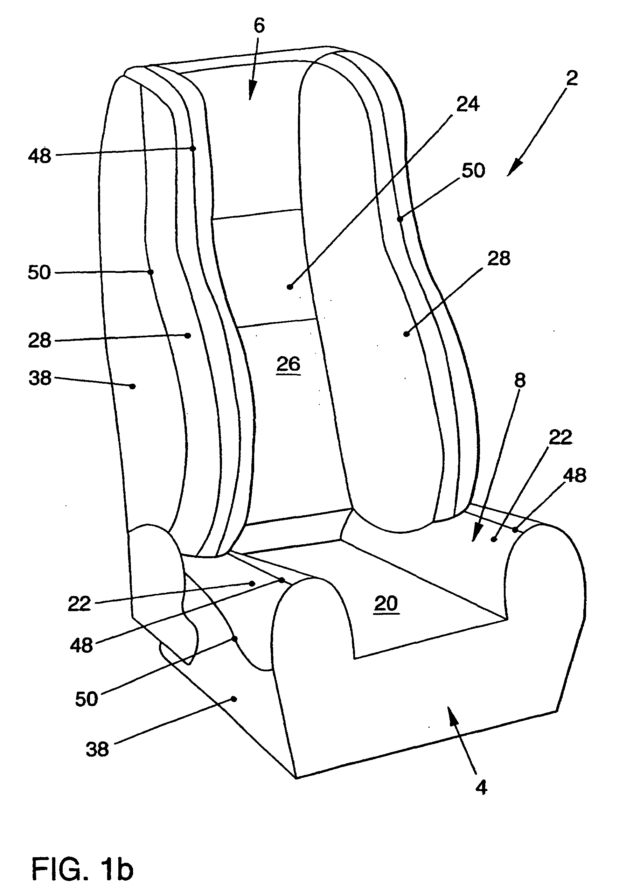

Wie am besten in Figur 1a dargestellt, ist die Polsterung 8 des Sitzteils 4 auf dessen die Sitzfläche 18 bildender Oberseite in einen im wesentlichen ebenen und nahezu rechteckigen Mittelteil 20 und zwei seitlich des Mittelteils 20 angeordnete und nach oben über den Mittelteil 20 überstehende langgestreckte Seitenwangen 22 unterteilt. In entsprechender Weise ist die Polsterung 8 der Rückenlehne 6 auf deren die Anlehnfläche 24 bildender Vorderseite in einen im wesentlichen ebenen und nahezu rechteckigen Mittelteil 26 und zwei seitlich des Mittelteils 26 angeordnete und nach vorne über den Mittelteil 26 überstehende langgestreckte Seitenwangen 28 unterteilt. Die Seitenwangen 22, 28 des Sitzteils 4 und der Rückenlehne 6 erstrecken sich jeweils etwa parallel zu einer vertikalen Längsmittelebene des Fahrzeugsitzes 2.

Um den Schutz eines auf dem Fahrzeugsitz 2 sitzenden Fahrzeuginsassen bei einem Seitenaufprall zu verbessern, sind die Seitenwangen 22, 28 des Sitzteils 4 und der Rückenlehne 6 aufblasbar, wie am besten in Figur 1b dargestellt. Durch das Aufblasen der Seitenwangen 22, 28 wird deren Überstand gegenüber dem Mittelteil 20, 26 vergrößert, vorzugsweise so weit, dass der vom Sicherheitsgurt (nicht dargestellt) im Sitz 2 zurückgehaltene Fahrzeuginsasse in seitlicher Richtung vollständig oder zumindest zum überwiegenden Teil von den aufgeblasenen Seitenwangen 22, 28 verdeckt wird, ähnlich wie ein Kleinkind von den starren Seitenwangen bekannter Kraftfahrzeugkindersitze. Das heißt, der Überstand der Seitenwangen 22, 28 über den Mittelteil 20, 26 wird zumindest verdoppelt, vorzugsweise verdreifacht oder vervierfacht.

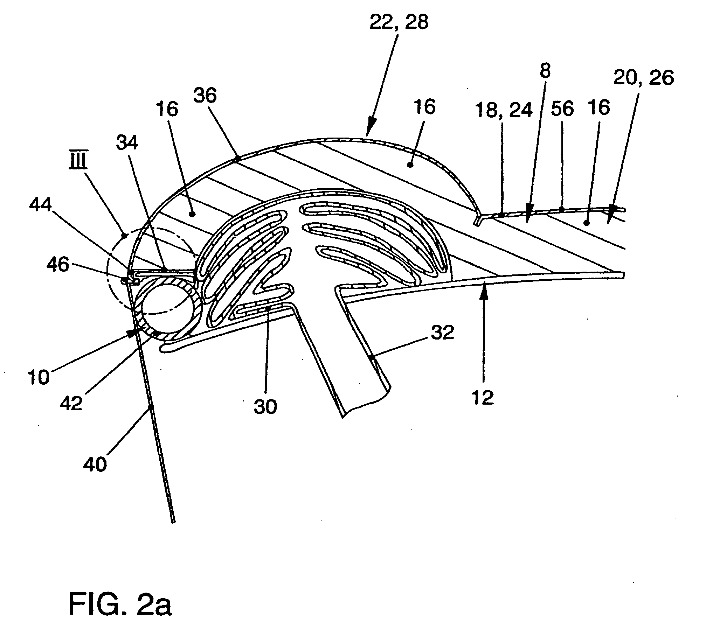

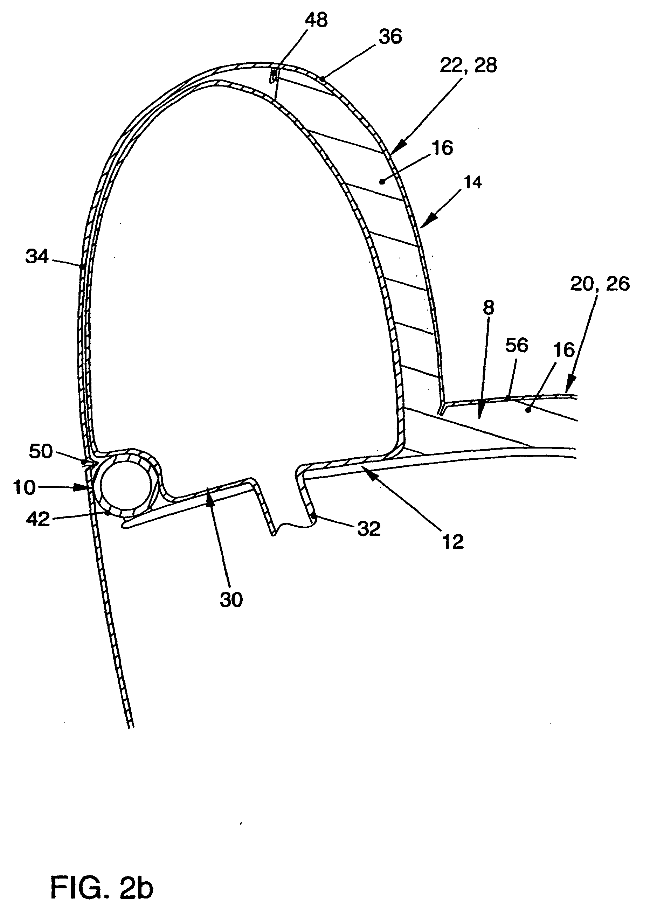

Zum Aufblasen der Seitenwangen 22, 28 dient ein in jeder Seitenwange 22, 28 angeordneter Luftsack 30 (Figuren 2a und 2b), der sich im wesentlichen entlang der gesamten Länge der Seitenwange 22, 28 erstreckt und im normalen Fahrbetrieb in zusammengefaltetem Zustand zwischen dem Schaumstoffpolster 16 und dem federnden Drahtgeflecht 12 der Polsterung 8 angeordnet ist, wie in Figur 2a dargestellt. Beim Aufblasen des Luftsacks 30 bildet das federnde Drahtgeflecht 12 der Polsterung 8 ein Widerlager, das ein Ausweichen des Luftsacks 30 weg von der Sitzfläche 18 beziehungsweise der Anlehnfläche 24 verhindert, so dass sich der Luftsack 30 überwiegend nach oben beziehungsweise nach vorne zu ausdehnt.

Die Luftsäcke 30 in sämtlichen Seitenwangen 22, 28 können über Verbindungsleitungen oder Verbindungsschläuche 32 mit einem zum Beispiel unterhalb des Sitzteils 4 angeordneten zentralen Gasgenerator (nicht dargestellt) verbunden sein, der bei einem Seitenaufprall in bekannter Weise aktiviert, das heißt gezündet wird. Alternativ können die Luftsäcke 30 in den Seitenwangen 22 des Sitzteils 4 und in den Seitenwangen 28 der Rückenlehne 6 jeweils mit einem getrennten, in den Sitzteil 4 beziehungsweise in die Rückenlehne 6 integrierten Gasgenerator (nicht dargestellt) verbunden sein.

Um zu vermeiden, dass die Ausdehnung der Luftsäcke 30 durch das Gewebematerial des Sitzbezugs 14 behindert wird, kann dieses im Bereich der Seitenwangen 22, 28 ein hohes Dehnvermögen aufweisen. Jedoch ist auch eine Verwendung gebräuchlicher Bezugstoffe 14 möglich, wenn ein Streifen Gewebematerial 34 zwischen einem die Seitenwange 22, 28 auf der Sitz- beziehungsweise Anlehnfläche bedeckenden Bezugstoffzuschnitt 36 und einem angrenzenden Bezugstoffzuschnitt 40 eingesetzt wird, der eine Seitenfläche 38 des Sitzteils 4 beziehungsweise der Rückenlehne 6 bedeckt, wie in den Figuren 2a und 2b dargestellt. Dieser Streifen Gewebematerial 34 weist zwei entgegengesetzte Längsseitenränder auf, die jeweils mit den einander benachbarten Rändern der beiden Bezugstoffzuschnitte 36, 40 vernäht sind, und ist im normalen Betriebszustand innerhalb der Polsterung 8 des Sitzes 2 zusammengefaltet, beispielsweise zwischen einem Längsträger 42 des Metallrahmens 10 und dem Schaumstoffpolster 16, wie in Figur 2a dargestellt. Die beiden Bezugstoffzuschnitte 36, 40 sind weiter entlang ihrer benachbarten Ränder durch eine Kedemaht 44 miteinander verbunden. Die Kedemaht 44 besteht aus einer einzigen, durch die Ränder der Bezugstoffzuschnitte 36, 40 und den Steg des Keders 46 hindurchgenähten Stichreihe. Demgegenüber sind die Nähte 48, 50 zwischen den entgegengesetzten Längsseitenrändem des Gewebestreifens 34 und den über die Kedernaht 44 überstehenden Rändern der beiden Bezugstoffzuschnitte 36, 40 jeweils als Doppelnaht mit einer doppelten Stichreihe ausgebildet, so dass sie eine erheblich größere Belastbarkeit als die Kedemaht 44 aufweisen. Die Belastbarkeit der Kedernaht 44 ist so gewählt, dass sie beim Aufblasen des Luftsacks 30 entlang ihrer gesamten Länge aufreißt, wobei der Gewebestreifen 34 die Lücke zwischen den beiden Bezugstoffzuschnitten 36, 40 überspannt oder füllt, wie in Figur 2b dargestellt, und den prall aufgeblasenen Luftsack 30 zwischen dem federnden Drahtgeflecht 14 einerseits und dem gespannten Gewebezuschnitt aus den Bezugstoffzuschnitten 36, 40 sowie dem Gewebestreifen 34 andererseits festhält. Dadurch kann ein Ausweichen des gefüllten Luftsacks 30 vermieden und dessen Polster- und Schutzwirkung gegen das Vordringen von Fremdkörpern bis zum Fahrzeuginsassen verbessert werden.

Die unterschiedliche Belastbarkeit der Kedemaht 44 und der Nähte 48, 50 zwischen dem Gewebestreifen 34 und den beiden Bezugstoffzuschnitten 36, 40 kann statt durch Verwendung einer unterschiedlichen Anzahl von Stichreihen auch durch Verwendung unterschiedlicher Fadenstärken oder Materialeigenschaften des Nahtmaterials erreicht werden. Beispielsweise kann für die Nähte 48, 50 ein Ober- und Unterfaden mit gleicher Fadenstärke, vorzugsweise 40/3 (40 m/g, 3 Einzelfäden) und aus dem gleichen Material, vorzugsweise aus Polyamid 6.6, verwendet werden, während für die Kedemaht 44 ein ebenfalls aus Polyamid 6.6 bestehender Ober- und Unterfaden, jedoch mit unterschiedlicher Fadenstärke, vorzugsweise 40/3 für den Oberfaden und 80/3 für den Unterfaden, verwendet wird. Dies ist auch ausreichend, um die Belastbarkeit der Kedernaht 44 so weit zu verringern, dass diese beim Aufblasen des Luftsacks 30 sicher aufreißt.

Statt zwischen die Bezugstoffzuschnitte 36 und 40 kann der Gewebestreifen auch zwischen den Bezugstoffzuschnitt 36 und einen den Mittelteil 20 beziehungsweise 26 des Sitzteils 4 beziehungsweise der Rückenlehne 6 bedeckenden Bezugstoffzuschnitt 56 eingesetzt werden. Bei Verwendung von Schonbezügen können diese entsprechende Eigenschaften wie der Sitzbezug 14 aufweisen.

## Patentansprüche

1. Kraftfahrzeugsitz mit einem gepolsterten Sitzteil (4), dessen Sitzfläche (18) von den Oberseiten eines Mittelteils (20) und zweier in Bezug zum Mittelteil (20) leicht nach oben überstehender Seitenwangen (22, 28) gebildet wird, und/oder mit einer gepolsterten Rückenlehne (6), deren Anlehnfläche (24) von den Vorderseiten eines Mittelteils (26) und zweier in Bezug zum Mittelteil (20, 26) leicht nach vorne überstehender Seitenwangen (22, 28) gebildet wird, wobei in Bereichen der Polsterung des Fahrzeugsitzes Hohlräume vorgesehen sind, die mit einer aktivierbaren Füllvorrichtung in Verbindung stehen, **dadurch gekennzeichnet, dass** mindestens eine der Seitenwangen (22, 28) des Sitzteiles (4) und/oder der Rückenlehne (6) im Bereich einer zwischen einem Bezugstoffzuschnitt (36) der Seitenwange (22, 28) und einem, an einem angrenzenden Bezugstoffzuschnitt (40) , eingesetzten Streifen Gewebematerial (34) in der Seitenwange (22, 28) angeordneten Naht (44) so lange durch Dehnung der Bezugstoffzuschnitte (36, 40) durch Aufblasen vergrößbar ist, bis der eingesetzte Streifen Gewebematerial (34) nach Aufreißen entlang der Naht (44) deren Ränder überbrückt, wodurch mindestens eine Seitenwange (22, 28) um einen weitergehenden Überstand über das jeweilige Mittelteil (20, 26) vergrößerbar ist.

2. Kraftfahrzeugsitz nach Anspruch 1, **dadurch gekennzeichnet, dass** die im Innem der aufblasbaren Seitenwange (22, 28) angeordnete aktivierbare Füllvorrichtung ein aufblasbarer Luftsack (30) ist.

3. Kraftfahrzeugsitz nach Anspruch 2, **dadurch gekennzeichnet, dass** der Luftsack (30) in aufgeblasenem Zustand in der Seitenwange (22, 28) eingeschlossen bleibt.

4. Kraftfahrzeugsitz nach Anspruch 2 oder 3, **gekennzeichnet durch** mindestens einen innerhalb oder unterhalb des Sitzes (2) angeordneten und mit dem Luftsack (30) verbundenen Gasgenerator.

5. Kraftfahrzeugsitz nach einem der Ansprüche 1 bis 4, **dadurch gekennzeichnet, dass** nur eine türseitige Seitenwange (22, 28) des Sitzteils (4) und/oder der Rückenlehne (6) aufblasbar ist.

6. Kraftfahrzeugsitz nach einem der Ansprüche 1 bis 4, **dadurch gekennzeichnet, dass** jeweils beide entgegengesetzte Seitenwangen (22, 28) des Sitzteils (4) und/oder der Rückenlehne (6) aufblasbar sind.

7. Kraftfahrzeugsitz nach einem der Ansprüche 1 bis 6, **dadurch gekennzeichnet, dass** die Luftsäcke in den Seitenwangen (22, 28) der Rückenlehne (6) und des Sitzteils (4) von einem gemeinsamen Gasgenerator aufgeblasen werden.

8. Kraftfahrzeugsitz nach einem der Ansprüche 1 bis 7, **dadurch gekennzeichnet, dass** die aufblasbare Seitenwange (22, 28) mindestens teilweise mit einem Bezugsstoff aus einem elastisch dehnbaren Gewebematerial bezogen ist, um eine Vergrößerung der Oberfläche der aufgeblasenen Seitenwange (22, 28) zu ermöglichen.

9. Kraftfahrzeugsitz nach einem der Ansprüche 1 bis 8, **dadurch gekennzeichnet, dass** entlang einer beim Aufblasen der Seitenwange (22, 28) aufreißenden Naht (44) zwischen einem Bezugstoffzuschnitt (36) der Seitenwange (22, 28) und einem angrenzenden Bezugstoffzuschnitt (40) ein Streifen Gewebematerial (36) eingesetzt ist, der beim Aufreißen der Naht (40) deren Ränder überbrückt, um so eine Vergrößerung der Oberfläche der aufgeblasenen Seitenwange (22, 28) zu ermöglichen.

10. Kraftfahrzeugsitz nach Anspruch 9, **dadurch gekennzeichnet, dass** der Gewebestreifen (34) vor dem Aufblasen der Seitenwange (22, 28) unter dem oder den Bezugstoffzuschnitten (36, 40) angeordnet ist.

11. Kraftfahrzeugsitz nach Anspruch 9 oder 10, **dadurch gekennzeichnet, dass** die aufreißende Naht zwischen zwei Bezugstoffzuschnitten angeordnet ist, von denen einer die Seitenwange und einer den Mittelteil mindestens teilweise bedeckt.

12. Kraftfahrzeugsitz nach Anspruch 9 oder 10, **dadurch gekennzeichnet, dass** die aufreißende Naht (44) zwischen zwei Bezugstoffzuschnitten (36, 40) angeordnet ist, von denen einer (36) die Seitenwange (22, 28) und einer eine an die Seitenwange (22, 28) angrenzende Seitenfläche des Sitzteils (4) oder der Rückenlehne (6) mindestens teilweise bedeckt.

13. Kraftfahrzeugsitz nach Anspruch 9 oder 10, **dadurch gekennzeichnet, dass** die Naht zwischen zwei benachbarten Bezugstoffzuschnitten der Seitenwange angeordnet ist.

14. Kraftfahrzeugsitz nach einem der Ansprüche 9 bis 13, **dadurch gekennzeichnet, dass** der Streifen Gewebematerial (34) an seinen entgegengesetzten Rändern mit den sich gegenüberliegenden Rändern der Bezugstoffzuschnitte (36, 40) vernäht ist, und dass die Nähte (48, 50) zwischen dem Gewebestreifen (34) und den Bezugstoffzuschnitten (36, 40) eine höhere Belastbarkeit aufweisen als die Naht (44) zwischen den beiden Zuschnitten (36, 40).

15. Kraftfahrzeugsitz nach Anspruch 14, **dadurch gekennzeichnet, dass** die Reißfestigkeit eines Nahtmaterials der Naht (44) zwischen den Bezugstoffzuschnitten (36, 40) geringer ist als diejenige des Nahtmaterials der Nähte (48, 50) zwischen dem Gewebestreifen (34) und jedem der Bezugstoffzuschnitte (36, 40).

16. Kraftfahrzeugsitz nach Anspruch 15, **dadurch gekennzeichnet, dass** ein Ober- oder Unterfaden mindestens einer Stichreihe der Naht (44) zwischen den Bezugstoffzuschnitten (36, 40) dünner ist als derjenige der Stichreihen der Nähte (48, 50) zwischen dem Gewebestreifen (34) und jedem der Bezugstoffzuschnitte (36, 40).

17. Kraftfahrzeugsitz nach Anspruch 14, **dadurch gekennzeichnet, dass** die Naht (44) zwischen den Bezugstoffzuschnitten (36, 40) eine geringere Anzahl nebeneinander angeordneter Stichreihen aufweist, als die Nähte (48, 50) zwischen dem Gewebestreifen (34) und jedem der Bezugstoffzuschnitte (36, 40).

18. Sitz- oder Schonbezug für einen Kraftfahrzeugsitz, umfassend mindestens zwei aneinandergrenzende Bezugstoffzuschnitte (36, 40), eine zwischen zwei gegenüberliegenden Rändern der Bezugstoffzuschnitte (36, 40) angeordnete und die beiden Bezugstoffzuschnitte (36, 40) verbindende Naht (44) **dadurch gekennzeichnet, dass** der Sitz- oder Schonbezug auch einen zwischen die gegenüberliegenden Ränder der Bezugstoffzuschnitte (36, 40) eingesetzten, die Naht (44) überbrückenden Streifen Gewebematerial (34) umfasst, wobei zwei weiteren Nähte (48, 50) zwischen dem Gewebematerialstreifen (34) und den Bezugstoffzuschnitten (36, 40) eine höhere Belastbarkeit aufweisen als die Naht (44) zwischen den beiden Zuschnitten (36, 40).

19. Kraftfahrzeug, umfassend mindestens einen Fahrzeugsitz (2) nach einem der vorangehenden Ansprüche.

## Claims

1. Motor vehicle seat with an upholstered seat component (4), of which the seating surface (18) is formed by the upper sides of a central component (20) and two lateral portions (22, 28) projecting slightly upwards relative to the central component (20), and/or with an upholstered back rest (6), of which the contact surface (24) is formed by the front sides of a central component (26) and two lateral portions (22, 28) projecting slightly forward relative to the central component (20, 26), wherein cavities connected to an active filling device are provided in regions of the upholstery of the vehicle seat, **characterised in that** at least one of the lateral portions (22, 28) of the seat component (4) and/or the back rest (6) can be enlarged by inflation in the region of a seam (44) arranged in the lateral portion (22, 28) between a covering-fabric panel (36) of the lateral portion (22, 28) and an inserted strip of textile material (34) on an adjacent fabric panel (40), by stretching the fabric panels (36, 40) until, after the tearing open of the seam (44), the inserted strip of textile material (34) bridges its edges, so that at least one lateral portion (22, 28) can be enlarged by projecting further beyond the relevant central component (20, 26).

2. Motor vehicle seat according to claim 1, **characterised in that** the active filling device arranged in the interior of the inflatable lateral portion (22, 28) is an inflatable air bag (30).

3. Motor vehicle seat according to claim 2, **characterised in that** the air bag (30) remains enclosed in the inflatable condition inside the lateral portion (22, 28).

4. Motor vehicle seat according to claim 2 or 3, **characterised by** at least one gas generator arranged inside or below the seat (2) and connected to the air bag (30).

5. Motor vehicle seat according to any one of claims 1 to 4, **characterised in that** only one door-side, lateral portion (22, 28) of the seat component (4) and/or of the back rest (6) is inflatable.

6. Motor vehicle seat according to any one of claims 1 to 4, **characterised in that**, in each case both opposing lateral portions (22, 28) of the seat component (4) and/or of the back rest (6) are inflatable.

7. Motor vehicle seat according to any one of claims 1 to 6, **characterised in that** the air bags in the lateral portions (22, 28) of the back rest (6) and of the seat component (4) are inflated by a common gas generator.

8. Motor vehicle seat according to any one of claims 1 to 7, **characterised in that** the inflatable lateral portion (22, 28) is covered at least partially with a covering material made from a resilient, expandable textile material, in order to allow an enlargement of the surface of the inflated lateral portion (22, 28).

9. Motor vehicle seat according to any one of claims 1 to 8, **characterised in that,** along a seam (44) between a covering-fabric panel (36) of the lateral portion (22, 28) and an adjacent covering-fabric panel (40), which seam tears open during the inflation of the lateral portion (22, 28), a strip of textile material (34) is inserted, which bridges the edges of the seam after the tearing open of the seam (40), in order, in this manner, to allow an enlargement of the surface of the inflated lateral portion (22, 28).

10. Motor vehicle seat according to claim 9 **characterised in that**, before the inflation of the lateral portion (22, 28), the textile strip (34) is arranged below the covering-fabric panels (36, 40).

11. Motor vehicle seat according to claim 9 or 10, **characterised in that** the destructible seam (44) is arranged between two covering-fabric panels, of which one at least partially covers the lateral panel and one at least partially covers the central component.

12. Motor vehicle seat according to claim 9 or 10, **characterised in that** the destructible seam (44) is arranged between two covering-fabric panels (36, 40), of which one (36) at least partially covers the lateral portion (22, 28) and one at least partially covers the lateral surface of the seat component (4) or of the back rest (6) adjacent to the lateral portion (22, 28).

13. Motor vehicle seat according to claim 9 or 10,
**characterised in that** the seam is arranged between , two adjacent covering-fabric panels of the lateral portion.

14. Motor vehicle seat according to any one of claims 9 to 13, **characterised in that** the strip of textile material (34) is stitched by its opposing edges to the opposite edges of the covering-fabric panels (36, 40), and that the seams (48, 50) between the textile strip (34) and the covering-fabric panels (36, 40) provide a greater strength than the seam (44) between the two panels (36, 40).

15. Motor vehicle seat according to claim 14, **characterised in that** the resistance to tearing of a seam material of the seam (44) between the covering-fabric panels (36, 40) is less than that of the seam material of the seams (48, 50) between the textile strip (34) and that of the covering-fabric panels (36, 40).

16. Motor vehicle seat according to claim 15, **characterised in that** an upper or lower thread of at least one row of stitching of the seam (44) between the covering-fabric panels (36, 40) is thinner than that of the row of stitching of the seams (48, 50) between the textile strip (34) and each of the covering-fabric panels (36, 40).

17. Motor vehicle seat according to claim 14, **characterised in that** the seams (44) between the covering-fabric panels (36, 40) provide a smaller number of adjacently arranged rows of stitching than the seams (48, 50) between the textile strip (34) and each of the covering-fabric panels (36, 40)., ,

18. Seat or protective covering for a motor vehicle seat, comprising at least two mutually adjacent covering-fabric panels (36, 40), a seam (44) arranged between two opposing edges of the covering-fabric panels (36, 40) and connecting the two covering-fabric panels (36, 40), **characterised in that** the seat or protective covering also provides a strip of textile material (34) inserted between the opposing edges of the covering material panels (36, 40) and bridging the seam (44), wherein two further seams (48, 50) between the textile material strip (34) and the covering-fabric panels (36, 40) provide a greater strength than the seam (44) between the two panels (36, 40).

19. Motor vehicle, comprising at least one motor vehicle seat (2) according to any one of the preceding claims.

## Revendications

1. Siège de véhicule automobile comportant un bloc d'assise rembourré (4), dont la surface d'assise (18) est constituée des faces supérieures d'une partie centrale (20) et de deux panneaux latéraux (22, 28) dépassant légèrement vers le haut par rapport à la partie centrale (20), et/ou comportant un dossier rembourré (6), dont la surface d'adossement (24) est constituée des faces avant d'une partie centrale (26) de deux panneaux latéraux (22, 28) dépassant légèrement vers l'avant par rapport à la partie centrale (20, 26), des espaces creux, qui sont reliés à un dispositif de remplissage pouvant être activé, étant prévus dans des zones du rembourrage du siège de véhicule, **caractérisé en ce que**, dans la zone d'une couture (44) disposée dans le panneau latéral (22, 28) entre une découpe de matière de revêtement (36) du panneau latéral (22, 28), et une bande de tissu (34) insérée au niveau d'une découpe de matière de revêtement (40) adjacente, l'un au moins des panneaux latéraux (22, 28) du bloc d'assise (4) et/ou du dossier (6) peut être agrandi par gonflage moyennant l'expansion des découpes de matière de revêtement (36, 40) jusqu'à ce que la bande de tissu (34) insérée, après s'être déchirée le long de la couture (44), ponte les bords de cette dernière, moyen par lequel l'un au moins des panneaux latéraux (22, 28) peut être agrandi d'un dépassement s'étendant au-dessus de la partie centrale (20, 26) respective.

2. Siège de véhicule automobile selon la revendication 1, **caractérisé en ce que** le dispositif de remplissage pouvant être activé, disposé à l'intérieur du panneau latéral (22, 28) gonflable, est un coussin à gaz (30) gonflable.

3. Siège de véhicule automobile selon la revendication 2, **caractérisé en ce qu'**à l'état gonflé, le coussin à gaz (30) reste intégré dans le panneau latéral (22, 28).

4. Siège de véhicule automobile selon la revendication 2 ou 3, **caractérisé par** au moins un générateur de gaz disposé dans ou sous le siège (2), et relié au coussin à gaz (30).

5. Siège de véhicule automobile selon l'une quelconque des revendications 1 à 4, **caractérisé en ce que** seul un panneau latéral (22, 28) situé du côté de la porte du bloc d'assise (4) et/ou du dossier (6) est gonflable.

6. Siège de véhicule automobile selon l'une quelconque des revendications 1 à 4, **caractérisé en ce que** les deux panneaux latéraux (22, 28) opposés du bloc d'assise (4) et/ou du dossier (6) sont gonflables.

7. Siège de véhicule automobile selon l'une quelconque des revendications 1 à 6, **caractérisé en ce que** les coussins à gaz intégrés dans les panneaux latéraux (22, 28) du dossier (6) et du bloc d'assise (4) sont gonflés par un générateur de gaz commun.

8. Siège de véhicule automobile selon l'une quelconque des revendications 1 à 7, **caractérisé en ce que** le panneau latéral (22, 28) gonflable est revêtu, au moins partiellement, d'une matière de revêtement en un tissu élastiquement expansible afin de permettre un agrandissement de la surface du panneau latéral (22, 28) gonflé.

9. Siège de véhicule automobile selon l'une quelconque des revendications 1 à 8, **caractérisé en ce que**, le long d'une couture (44) se déchirant lors du gonflage du panneau latéral (22, 28), une bande de tissu (36) est insérée entre une découpe de matière de revêtement (36) du panneau latéral (22, 28) et une découpe de matière de revêtement (40) adjacente, laquelle ponte les bords de la couture (40) lors de la déchirure de celle-ci afin de permettre ainsi un agrandissement de la surface du panneau latéral (22, 28) gonflé.

10. Siège de véhicule automobile selon la revendication 9, **caractérisé en ce que** la bande de tissu (34) est disposée avant le gonflage du panneau latéral (22, 28) sous la ou les découpes de matière de revêtement (36, 40).

11. Siège de véhicule automobile selon la revendication 9 ou 10, **caractérisé en ce que** la couture se déchirant est disposée entre deux découpes de matière de revêtement, dont l'une recouvre le panneau latéral et l'autre la partie centrale, au moins partiellement.

12. Siège de véhicule automobile selon la revendication 9 ou 10, **caractérisé en ce que** la couture (44) se déchirant est disposée entre deux découpes de matière de revêtement (36, 40), dont l'une (36) recouvre le panneau latéral (22, 28) et l'autre une surface latérale adjacente au panneau latéral (22, 28) du bloc d'assise (4) ou du dossier (6), au moins partiellement.

13. Siège de véhicule automobile selon la revendication 9 ou 10, **caractérisé en ce que** la couture est disposée entre deux découpes de matière de revêtement adjacentes du panneau latéral.

14. Siège de véhicule automobile selon l'une quelconque des revendications 9 à 13, **caractérisé en ce que** la bande de tissu (34) est cousue par ses bords opposés aux bords situés les uns en face des autres des découpes de matière de revêtement (36, 40), et **en ce que** les coutures (48, 50) entre la bande de tissu (34) et les découpes de matière de revêtement (36, 40) peuvent être sollicitées plus fortement que la couture (44) entre les deux découpes (36, 40).

15. Siège de véhicule automobile selon la revendication 14, **caractérisé en ce que** la résistance à la déchirure d'une matière de la couture (44) entre les découpes de matière de revêtement (36, 40) est plus faible que celle de la matière des coutures (48, 50) entre les bandes de tissu (34), et chacune des découpes de matière de revêtement (36, 40).

16. Siège de véhicule automobile selon la revendication 15, **caractérisé en ce qu'**un fil supérieur ou un fil inférieur d'une rangée au moins de piqûres de la couture (44) entre les découpes de matière de revêtement (36, 40) est plus fin que celui des rangées de piqûres des coutures (48, 50) entre la bande de tissu (34) et chacune des découpes de matière de revêtement (36, 40).

17. Siège de véhicule automobile selon la revendication 14, **caractérisé en ce que** la couture (44) entre les découpes de matière de revêtement (36, 40) comporte un nombre plus faible de rangées de piqûres disposées côte à côte, que les coutures (48, 50) entre la bande de tissu (34) et chacune des découpes de matière de revêtement (36, 40).

18. Revêtement de siège ou de protection pour un siège de véhicule automobile, comportant au moins deux découpes de matière de revêtement (36, 40) adjacentes l'une par rapport à l'autre, une couture (44) disposée entre deux bords opposés des découpes de matière de revêtement (36, 40), et reliant les deux découpes de matière de revêtement (36, 40), **caractérisé en ce que** le revêtement de siège ou de protection englobe une bande de tissu (34) insérée entre des bords opposés des découpes de matière de revêtement (36, 40), et pontant la couture (44), deux autres coutures (48, 50) entre la bande de tissu (34) et les découpes de matière de revêtement (36, 40) pouvant être sollicitées plus fortement que la couture (44) entre les deux découpes (36, 40).

19. Véhicule automobile comportant un siège de véhicule (2) selon l'une quelconque des revendications précédentes.
